# EUROPÄISCHE PATENTANMELDUNG

(11) **EP 3 264 044 A1**
(43) Veröffentlichungstag der Anmeldung: **03.01.2018**
(21) Anmeldenummer: 17180205.1
(22) Anmeldetag: 03.11.2016
(51) Int. Cl.: G01C 21/34

(54) **VERFAHREN ZUR ERMITTLUNG VON RADSTRECKEN, VERFAHREN ZUR RADSTRECKENANFRAGE, SERVERVORRICHTUNG UND FAHRRADNAVIGATIONSVORRICHTUNG**

(30) Priorität: 13.11.2015 DE 102015222464
(62) Teilanmeldung aus: 16197032.2
(71) Anmelder: Robert Bosch GmbH, 70442 Stuttgart (DE)
(72) Erfinder: Dackermann, Tim, 72072 Tuebingen (DE); Greiner, Rinaldo, 72762 Reutlingen (DE)

(57) **Zusammenfassung**

Die vorliegende Erfindung betrifft ein Verfahren zur Ermittlung von Radstrecken in Abhängigkeit einer Fahrerkategorie und eine Servervorrichtung durch die dieses Verfahren zur Ermittlung von Radstrecken durchgeführt wird. Die vorliegende Erfindung betrifft außerdem ein Verfahren zur Radstreckenanfrage und eine Fahrradnavigationsvorrichtung durch die dieses Verfahren zur Radstreckenanfrage durchgeführt wird.

## Beschreibung

Die vorliegende Erfindung betrifft ein Verfahren zur Ermittlung von Radstrecken in Abhängigkeit einer Fahrerkategorie, ein Verfahren zur Radstreckenanfrage, eine Servervorrichtung und eine Fahrradnavigationsvorrichtung.

### Stand der Technik

Stand der Technik im Bereich der Fahrradnavigation sind Routenplaner, die für die Ermittlung einer Radstrecke als Fahrradweg gekennzeichnete Strecken berücksichtigen. Die Recherche von geeigneten Radstrecken für Unterkategorien an Fahrradfahrern, wie beispielsweise Rennradfahrer oder Mountainbiker, muss manuell in Internetforen oder in entsprechender Literatur durchgeführt werden.

In der Schrift US 2010/0101717 A1 ist ein Verfahren zur Anpassung von Trainingsrouten beschrieben, wobei ein Nutzer eine Kategorie einer Trainingstrecke, z.B. einen Schwierigkeitsgrad oder einen Terraintyp, und eine Länge der Trainingstrecke eingibt. Die Trainingsstrecke kann ein Rundkurs und/oder eine Strecke sein. Das Verfahren ermittelt für Radfahrer eine Trainingsstrecke auf Basis der Eingabe des Nutzers und zeigt dem Nutzer die ermittelte Trainingsstrecke mit zugehörigen Streckeninformationen an.

### Offenbarung der Erfindung

Die vorliegende Erfindung betrifft ein Verfahren zur Ermittlung von Radstrecken in Abhängigkeit einer Fahrerkategorie und eine Servervorrichtung durch die dieses Verfahren durchgeführt wird. Die vorliegende Erfindung betrifft außerdem ein Verfahren zur Radstreckenanfrage und eine Fahrradnavigationsvorrichtung durch die das Verfahren zur Radstreckenanfrage durchgeführt wird.

Das Verfahren zur Ermittlung von Radstrecken in Abhängigkeit einer Fahrerkategorie umfasst den Empfang einer Radstreckenanfrage eines Einzelnutzers. Die Radstreckenanfrage umfasst einen Startort, einen Zielort und eine Fahrerkategorie.

Die Fahrerkategorie repräsentiert eine Leistungsfähigkeit und/oder ein gewünschtes Fahrverhalten des Einzelnutzers, wobei mindestens zwei vorgegebene Fahrerkategorien vorliegen. Jede Fahrerkategorie wird durch mindestens einen umgebungs- und/oder fahrspezifischen Parameterbereich definiert. Eine Fahrerkategorie kann durch eine Kombination mehrerer umgebungs- und/oder fahrspezifischen Parameter definiert werden. Beispielsweise unterscheidet sich eine Definition einer Fahrerkategorie "trainierter Radfahrer" von einer Fahrerkategorie "normaler Radfahrer" durch einen höheren Geschwindigkeitsbereich bzw. eine höhere Durchschnittsgeschwindigkeit bei gleicher Steigung. In einem weiteren Beispiel wird mit einer Fahrerkategorie "Mountainbiker" ein gewünschtes Fahrverhalten ohne Bezug zur Leistungsfähigkeit beschrieben. Die Fahrerkategorie "Mountainbiker" unterscheidet sich von einer Fahrerkategorie "Rennradfahrer" beispielsweise durch einen umgebungsspezifischen Parameter, z.B. die Häufigkeit und Stärke von Vibrationen auf einer Radstrecke.

In einem weiteren Schritt wird eine Auswahlstrecke zur Radstreckenanfrage ermittelt, wobei dieser Schritt mehrere Teilschritte umfassen kann. In einem ersten Schritt werden aus einer Datenbank mögliche Radstrecken in Abhängigkeit von empfangenen orts- und zeitaufgelösten umgebungs- und/oder fahrspezifischen Parametersätzen zu Routen einer Vielzahl an Radfahrern zwischen Start- und Zielort ermittelt.

Die zur möglichen Radstrecke empfangenen umgebungs- und/oder fahrspezifischen Parametersätze werden in einem weiteren Schritt den vorgegebenen Fahrerkategorien zugeordnet. Alternativ werden zur möglichen Radstrecke nur die der Fahrerkategorie des Einzelnutzers entsprechenden umgebungs- und/oder fahrspezifischen Parametersätze der Fahrerkategorie des Einzelnutzers zugeordnet.

In Abhängigkeit von der Fahrerkategorie des Einzelnutzers und den zugeordneten Parametersätzen einer möglichen Radstrecke werden zwischen Start- und Zielort durchschnittliche und/oder maximale umgebungs- und/oder fahrspezifische Parameterwerte der möglichen Radstrecke ermittelt und als Streckenparametersatz der möglichen Radstrecke gespeichert. Die Streckenparameter charakterisieren damit eine mögliche Radstrecke zusätzlich zu den Ortskoordinaten zwischen Start- und Zielort beispielsweise durch eine maximale Steigung und eine Durchschnittsgeschwindigkeit von Radfahrern. Die durchschnittlichen fahrspezifischen Parameter, wie beispielsweise die Durchschnittsgeschwindigkeit, sind jeweils auf die Fahrtrichtung und eine Fahrerkategorie bezogen.

In einem optionalen Schritt werden die der Fahrerkategorie des Einzelnutzers zugeordneten Parametersätze auf jeder möglichen Radstrecke einfach gezählt.

In einem weiteren Schritt wird mindestens eine Auswahlstrecke zur Radstreckenanfrage aus der Menge der möglichen Radstrecken identifiziert. Die Identifizierung der Auswahlstrecke erfolgt in Abhängigkeit der Fahrerkategorie des Einzelnutzers, der ermittelten Streckenparameter und/oder der Anzahl der auf den möglichen Radstrecken der Fahrerkategorie des Einzelnutzers zugeordneten Parametersätzen. Beispielsweise kann für eine Fahrerkategorie "gemütlicher Radfahrer" aus einer Menge an möglichen Radstrecken die Radstrecke mit der geringsten Steigung als Auswahlstrecke identifiziert werden. Die Identifizierung der Auswahlstrecke kann auch in Abhängigkeit von zwei oder mehreren Streckenparametern erfolgen. In einem abschließenden Schritt wird mindestens eine Auswahlstrecke mit den zugehörigen Streckenparametern an die Fahrradnavigationsvorrichtung des Einzelnutzers gesendet.

Durch diese Verfahrensschritte wird eine Auswahlstrecke in Abhängigkeit des Start- und Zielortes, der Leistungsfähigkeit und/oder des gewünschten Fahrverhaltens des Einzelnutzers ermittelt und die ermittelte Auswahlstrecke an die Fahrradnavigationsvorrichtung des Einzelnutzers gesendet.

In einer alternativen Ausführung der Erfindung werden bei der Ermittlung der Streckenparameter einer möglichen Strecke die Parametersätze zeitlich gewichtet, wobei aktuelle Parametersätze eine höhere Gewichtung erhalten. Durch eine zeitliche Gewichtung der Parametersätze werden aktuelle Änderungen des Fahrbahnbelages, Baustellen, ein umgefallener Baum oder Unfälle in der Ermittlung einer Auswahlstrecke stärker als ältere Parametersätze berücksichtigt, welche keine aktuellen Änderungen enthalten.

In einer weiteren, alternativen Ausführung erfolgt die Ermittlung der Auswahlstrecke in Abhängigkeit von orts- und zeitaufgelösten Wetterdaten der möglichen Radstrecken. Dadurch beeinflussen örtliche Wetterunterschiede die Ermittlung der Auswahlstrecke, wodurch beispielsweise bei einer längeren Radtour ein Regenschauer umfahren werden oder dem Einzelnutzer eine Pause in der Radtour vorgeschlagen werden kann.

In einer weiteren, alternativen Ausführung erfolgt die Ermittlung der Auswahlstrecke in Abhängigkeit von orts- und zeitaufgelösten Verkehrsdaten der möglichen Radstrecken. So sind die Verkehrsdaten anderer Fahrzeugklassen auf Radtouren für die Ermittlung einer Auswahlstrecke von Interesse. Durch die Berücksichtigung von solchen Verkehrsdaten kann eine Auswahlstrecke ermittelt werden, welche beispielsweise im Stadtverkehr viel befahrene und deshalb für Radfahrer unangenehme Straßen umfährt.

In einer weiteren, alternativen Ausführung erfolgt die Ermittlung der Auswahlstrecke in Abhängigkeit von ortsaufgelösten Beleuchtungsdaten der möglichen Radstrecken. In dieser Ausgestaltung des Verfahrens zur Ermittlung von Radstrecken wird somit eine beleuchtete und deshalb bei Dämmerung oder Nacht sicherere Auswahlstrecke ermittelt und an die Fahrradnavigationsvorrichtung des Einzelnutzers gesendet.

Die Erfindung betrifft außerdem ein Verfahren zur Radstreckenanfrage. Dieses Verfahren umfasst ein Erfassen eines Startortes, eines Zielortes und einer Fahrerkategorie an einer Fahrradnavigationsvorrichtung, sowie ein Absenden einer Radstreckenanfrage an eine Servervorrichtung. Das Verfahren zur Radstreckenanfrage umfasst des Weiteren ein Empfangen der Auswahlstrecke mit den Streckenkoordinaten und den zugehörigen Streckenparametern von der Servervorrichtung in der Fahrradnavigationsvorrichtung. Das Verfahren umfasst außerdem ein Anzeigen der Auswahlstrecke mit den Streckenkoordinaten und den zugehörigen Streckenparametern. Das Anzeigen erfolgt auf der Fahrradnavigationsvorrichtung, beispielsweise auf einem Fahrradcomputer.

Das Verfahren weist den Vorteil auf, dass durch das Erfassen der Radstreckenanfrage des Einzelnutzers mittels der Fahrradnavigationsvorrichtung die in der Servervorrichtung zwischen dem Start- und Zielort ermittelte Auswahlstrecke der Leistungsfähigkeit und/oder dem gewünschten Fahrverhalten des Einzelnutzers entspricht. Außerdem erfolgt die Ermittlung der Auswahlstrecke in Abhängigkeit aktueller Informationen zu Radtouren einer Vielzahl an Radfahrer, welche in der Servervorrichtung empfangen und gespeichert werden.

In einer möglichen Ausführung der Erfindung erfolgt die Erfassung der Fahrerkategorie aus mindestens zwei vorgegebenen Fahrerkategorien durch manuelle Eingabe des Einzelnutzers. Dies weist den Vorteil auf, dass der Radfahrer ein gewünschtes Fahrverhalten je nach Situation bzw. Befinden auswählen kann.

In einer alternativen Ausführung umfasst das Verfahren ein Erfassen von umgebungs- und/oder fahrspezifischen Parameter des Einzelnutzers auf mindestens einem Teil der Auswahlstrecke. Die Fahrerkategorie des Einzelnutzers wird in Abhängigkeit von den vorgegebenen Fahrerkategorien und den erfassten umgebungs- und/oder fahrspezifischen Parametern des Einzelnutzers ermittelt. In einem weiteren Schritt wird die ermittelte Fahrerkategorie mit der von dem Einzelnutzer manuell eingegebenen Fahrerkategorie verglichen. Alternativ wird die ermittelte Fahrerkategorie mit einer zu einem früheren Zeitpunkt ermittelten Fahrerkategorie verglichen. Bei einer Abweichung zwischen der ermittelten Fahrerkategorie und der manuell eingegebenen bzw. früher ermittelten Fahrerkategorie erfolgt ein Absenden einer neuen Radstreckenanfrage an eine Servervorrichtung. Die neue Radstreckenanfrage umfasst einen neuen, derzeitigen Startort, den Zielort und die ermittelte Fahrerkategorie. In einem weiteren Verfahrensschritt wird von der Servervorrichtung eine neue Auswahlstrecke mit den zugehörigen Streckenkoordinaten und den Streckenparametern empfangen. Die neue Auswahlstrecke wird mit den Streckenkoordinaten und den zugehörigen Streckenparametern angezeigt. Durch diese alternative Ausgestaltung der Erfindung wird beispielsweise eine Fehleinschätzung des Einzelnutzers bezüglich seiner Leistungsfähigkeit als Radfahrer erkannt und eine neue Auswahlstrecke entsprechend der tatsächlichen Leistungsfähigkeit ermittelt und angezeigt.

Die Erfindung betrifft des Weiteren eine Servervorrichtung, welche ein Verfahren zur Ermittlung von Radstrecken in Abhängigkeit einer Fahrerkategorie durchführt. Die Servervorrichtung umfasst mindestens eine Empfangseinheit, eine Recheneinheit und eine Sendeeinrichtung. Die Empfangseinheit empfängt zeit- und ortsaufgelöste umgebungs- und/oder fahrspezifische Parametersätze von Radtouren einer Vielzahl an Nutzern. Die Empfangseinheit empfängt des Weiteren eine Radstreckenanfrage eines Einzelnutzers, wobei die Radstreckenanfrage einen Startort, einen Zielort und eine Fahrerkategorie umfasst. Die Recheneinheit ermittelt mindestens eine Auswahlstrecke aus einer Anzahl möglicher Radstrecken in Abhängigkeit von Streckenparametern und/oder einer Anzahl an Parametersätzen, welche der Fahrerkategorie des Einzelnutzers entsprechen. Die Streckenparameter charakterisieren mögliche Radstrecken durch durchschnittliche umgebungs- und/oder fahrspezifische Parameterwerte. Die Servervorrichtung umfasst des Weiteren mindestens eine Sendeeinrichtung für das Senden der Auswahlstrecke mit den Streckenkoordinaten und den zugehörigen Streckenparametern an die Fahrradnavigationsvorrichtung des Einzelnutzers. Die Sendeeinrichtung der Servervorrichtung kann mit der Empfangseinheit kombiniert und als ein Bauteil realisiert werden. Die Servervorrichtung kann des Weiteren einen Speicher zum Speichern der erfassten und ermittelten Daten, wie beispielsweise der erfassten Parametersätze, umfassen. Durch diese Ausgestaltung der Servervorrichtung werden nur relativ wenige Daten zwischen der Fahrradnavigationsvorrichtung des Einzelnutzers und der Servervorrichtung versendet, so dass der Datenaustausch auf die notwendigsten Daten zur Ermittlung geeigneter Auswahlstrecken reduziert ist.

Die Erfindung betrifft des Weiteren eine Fahrradnavigationsvorrichtung zur Durchführung eines Verfahrens zur Radstreckenanfrage. Die Fahrradnavigationsvorrichtung umfasst mindestens ein Eingabegerät um einen Startort, einen Zielort und/oder eine Fahrerkategorie eines Einzelnutzers zu erfassen. Die Fahrradnavigationsvorrichtung umfasst außerdem mindestens eine Sendeeinrichtung zum Senden einer Radstreckenanfrage an eine Servervorrichtung und eine Empfangseinheit zum Empfang einer Auswahlstrecke mit dem zugehörigen Streckenkoordinaten und den zugehörigen Streckenparametern. Die Sendeeinrichtung der Fahrradnavigationsvorrichtung kann mit der Empfangseinheit kombiniert und als ein Bauteil realisiert werden. Die Fahrradnavigationsvorrichtung umfasst des Weiteren ein Anzeigegerät zum Anzeigen der Auswahlstrecke mit den zugehörigen Streckenparametern. Die Fahrradnavigationsvorrichtung arbeitet demnach effektiv durch wenige und einfache Verfahrensschritte. Der Leistungsverbrauch der Fahrradnavigationsvorrichtung ist entsprechend gering.

In einem weiteren, alternativen Aspekt der Erfindung erfasst die Fahrradnavigationsvorrichtung umgebungs- und/oder fahrspezifische Parameter des Einzelnutzers, wobei die Erfassung der Parameter mit mindestens einem oder mehreren Sensoren erfolgt. Der Sensor bzw. die Sensoren können innerhalb und/oder außerhalb der Fahrradnavigationsvorrichtung angeordnet sein. Beispielsweise können Sensoren am Fahrradrahmen angeordnet sein. Die Recheneinheit ermittelt die Fahrerkategorie des Einzelnutzers in Abhängigkeit von vorgegebenen Fahrerkategorien und den durch die Sensoren erfassten umgebungs- und/oder fahrspezifischen Parametern des Einzelnutzers. Die ermittelte Fahrerkategorie kann mit der ursprünglich erfassten Fahrerkategorie verglichen werden. Bei Abweichung der ermittelten Fahrerkategorie von der erfassten Fahrerkategorie wird von der Sendeeinrichtung eine neue Radstreckenanfrage an die Servervorrichtung gesendet. Die Radstreckenanfrage umfasst dabei einen neuen, aktuellen Startort, welcher beispielsweise mittels eines GPS-Sensors ermittelt wird, den Zielort und die ermittelte Fahrerkategorie. Die Empfangseinheit empfängt eine neue Auswahlstrecke mit zugehörigen Streckenkoordinaten und Streckenparametern. Das Anzeigegerät zeigt die Auswahlstrecke mit den zugehörigen Streckenkoordinaten und Streckenparametern an. Durch diese alternative Ausgestaltung der Erfindung werden gemessene Parameter zur Ermittlung der Leistungsfähigkeit und/oder des Fahrverhaltens verwendet. Dadurch wird eine genauere Einteilung der Fahrerkategorien bezüglich der Leistungsfähigkeit und/oder des Fahrverhaltens sowie ein Einsatz des Verfahrens im Training von Radleistungssportlern ermöglicht.

Die durch Sensoren erfassten umgebungs- und/oder fahrspezifischen Parameter des Einzelnutzers können als orts- und zeitaufgelöste Informationen an die Servervorrichtung gesendet werden.

### Zeichnungen

Figur 1: Übersicht zum Datenaustausch einer Servervorrichtung mit einer Fahrradnavigationsvorrichtung und einer Vielzahl an Radfahrern
Figur 2: Blockschaltbild einer Servervorrichtung
Figur 3: Blockschaltbild einer Fahrradnavigationsvorrichtung
Figur 4: Flussdiagramm eines Verfahrens zur Ermittlung von Radstrecken in Abhängigkeit einer Fahrerkategorie
Figur 5: Flussdiagramm zu den Schritten beim Ermitteln einer Auswahlstrecke zur Radstreckenanfrage
Figur 6: Flussdiagramm eines Verfahrens zur Radstreckenanfrage
Figur 7: Flussdiagramm des Verfahrens zur Radstreckenanfrage mit ergänzenden Verfahrensschritten

### Ausführungsbeispiele

Die vorliegende Erfindung betrifft ein Verfahren zur Ermittlung von Radstrecken in Abhängigkeit einer Fahrerkategorie, ein Verfahren zur Radstreckenanfrage, eine Servervorrichtung 100 und eine Fahrradnavigationsvorrichtung 200.

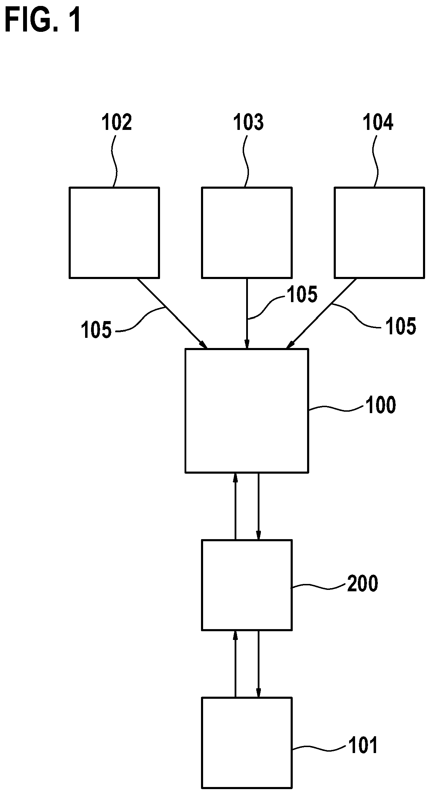

Wie in Figur 1 dargestellt, senden für die vorliegende Erfindung eine Vielzahl an Radfahrern 102, 103 und 104 Informationen 105 an eine Servervorrichtung 100. Die Informationen 105 umfassen orts- und zeitaufgelöste umgebungs- und/oder fahrspezifische Parametersätze zu den Radtouren. Die Informationen 105 werden in der Servervorrichtung 100 gespeichert.

Von einer Fahrradnavigationsvorrichtung 200 wird eine Radstreckenanfrage eines Einzelnutzers 101 erfasst. Die Radstreckenanfrage umfasst einen Start- und einen Zielort sowie eine Fahrerkategorie. Die Fahrerkategorie repräsentiert eine Leistungsfähigkeit und/oder ein gewünschtes Fahrverhalten des Einzelnutzers 101.

Das Verfahren zur Ermittlung von Radstrecken in Abhängigkeit einer Fahrerkategorie in der Servervorrichtung 100 umfasst den Empfang der Radstreckenanfrage von der Fahrradnavigationsvorrichtung 200 des Einzelnutzers 101, wie in Figur 1 dargestellt. Die Servervorrichtung 100 ermittelt zur Radstreckenanfrage mögliche Radstrecken zwischen dem Start- und dem Zielort und identifiziert aus den möglichen Radstrecken mindestens eine Auswahlstrecke. Die Ermittlung der Auswahlstrecke erfolgt in Abhängigkeit von Streckenparametern, welche die möglichen Radstrecken zusätzlich zu den Streckenkoordinaten charakterisieren. Streckenparameter charakterisieren eine mögliche Radstrecke durch auf die erfasste Fahrerkategorie der Radstreckenanfrage bezogene durchschnittliche und/oder maximale Parameterwerte, welche mittels der Informationen 105 einer Vielzahl an Radfahrern 102, 103 und 104 ermittelt werden. Optional oder ergänzend erfolgt die Ermittlung der Auswahlstrecke in Abhängigkeit von einer Anzahl an Parametersätzen, welche für die Fahrerkategorie des Einzelnutzers 101 auf einer möglichen Radstrecke vorliegen. Die ermittelte Auswahlstrecke wird mit den Streckenkoordinaten und den zugehörigen Streckenparametern durch die Servervorrichtung 100 an die Fahrradnavigationsvorrichtung 200 des Einzelnutzers 101 gesendet.

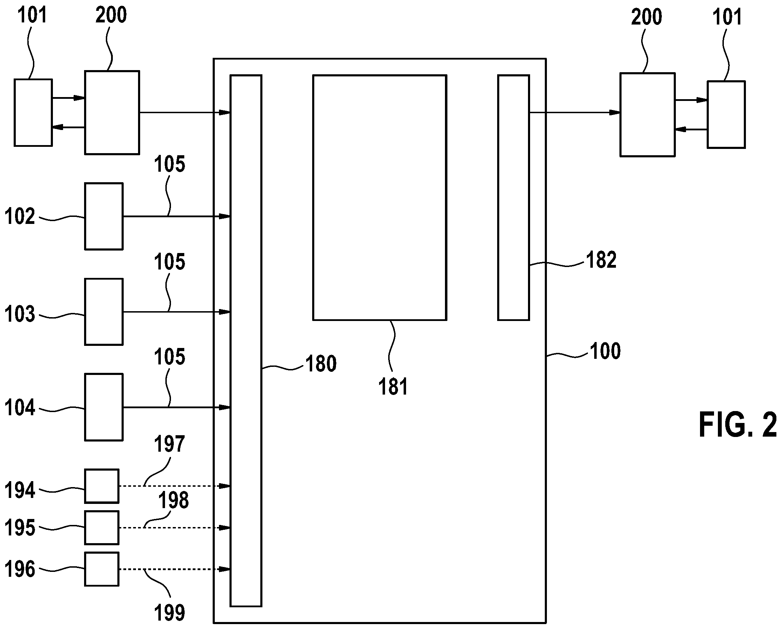

In Figur 2 ist die Servervorrichtung 100, auf welcher das Verfahren zur Ermittlung von Radstrecken in Abhängigkeit einer Fahrerkategorie durchgeführt wird, abgebildet. Eine Vielzahl an Radfahrern 102, 103 und 104 senden Informationen 105 zu Ihren Radtouren an eine Empfangseinheit 180. Diese Informationen 105 werden in der Servervorrichtung 100 gespeichert. Außerdem wird die Radstreckenanfrage von einer Fahrradnavigationsvorrichtung 200 eines Einzelnutzers 101 durch die Empfangseinheit 180 empfangen. In einer Recheneinheit 181 ermittelt die Servervorrichtung 100 in Abhängigkeit der gespeicherten Informationen 105 zu den Radtouren und der Radstreckenanfrage aus einer Menge an möglichen Radstrecken eine Auswahlstrecke mit zugehörigen Streckenparametern. Die Auswahlstrecke mit den zugehörigen Streckenkoordinaten und den Streckenparametern wird durch eine Sendeeinrichtung 182 an die Fahrradnavigationsvorrichtung 200 des Einzelnutzers 101 gesendet.

In alternativen Ausgestaltungen der Erfindung werden durch die Empfangseinheit 180 der Servervorrichtung 100 auch orts- und zeitaufgelöste Wetterdaten 197 von einer Wetterdatenbank 194, ortsaufgelöste Verkehrsdaten 198 von einer Verkehrsdatenbank 195 und/oder ortsaufgelöste Beleuchtungsdaten 199 von einer Beleuchtungsdatenbank 196 empfangen, wie in Figur 2 dargestellt. Die Auswahlstrecke wird in diesen alternativen Ausgestaltungen aus einer Anzahl möglicher Radstrecken durch die Recheneinheit 181 in Abhängigkeit von den Wetterdaten 197, den Verkehrsdaten 198 und/oder den Beleuchtungsdaten 199 ermittelt.

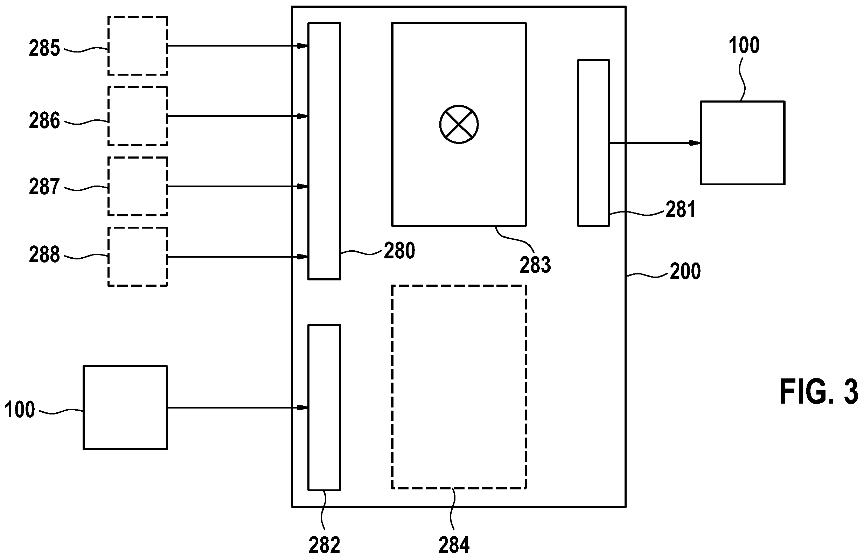

In Figur 3 ist eine erfindungsgemäße Fahrradnavigationsvorrichtung 200 abgebildet, welche ein Verfahren zur Radstreckenanfrage durchführt. Die Fahrradnavigationsvorrichtung 200 kann einem Computer mit einem Display, z.B. einem Smartphone oder einem Fahrradcomputer, entsprechen. Die Fahrradnavigationsvorrichtung 200 umfasst mindestens ein Eingabegerät 280 zum Erfassen einer Radstreckenanfrage, welche einen Startort, einen Zielort und/oder eine Fahrerkategorie eines Einzelnutzers 101 umfasst. Es sind mindestens zwei vorgegebene Fahrerkategorien vorgesehen. Die Erfassung der Fahrerkategorie kann durch manuelle Eingabe des Einzelnutzers 101 erfolgen, durch ein Einlesen einer gespeicherten Fahrerkategorie realisiert sein oder in Abhängigkeit von Sensordaten ermittelt werden. Die Fahrradnavigationsvorrichtung 200 umfasst außerdem eine Sendeeinrichtung 281 zum Senden der Radstreckenanfrage an eine Servervorrichtung 100. Eine Empfangseinheit 282 empfängt von der Servervorrichtung 100 ermittelte Daten, welche eine zur Radstreckenanfrage identifizierte Auswahlstrecke mit Streckenkoordinaten und zugehörigen Streckenparametern umfassen. Die Sendeeinrichtung 281 kann mit der Empfangseinheit 282 zusammengelegt sein bzw. durch eine kombinierte Sende- und Empfangsvorrichtung realisiert sein. Die Fahrradnavigationsvorrichtung 200 kann des Weiteren ein Anzeigegerät 283 umfassen, welches die Auswahlstrecke mit den zugehörigen Streckenparametern anzeigt.

In einer weiterführenden Ausgestaltung der Fahrradnavigationsvorrichtung 200 ist mindestens ein Sensor am Fahrrad angebracht. Wie in Figur 3 dargestellt, können auch vier Sensoren 285 bis 288 am Fahrrad angebracht sein. Die am Fahrrad oder in der Fahrradnavigationsvorrichtung angeordneten Sensoren 285 bis 288 können einen GPS-Sensor, einen Beschleunigungssensor, einen Geschwindigkeitssensor, ein MEMS-Gyroskop, einen Trittfrequenzsensor, einen Helligkeitssensor, einen Radarsensor und/oder ein Kamerasystem umfassen. Die Sensoren 285 bis 288 erfassen umgebungs- und/oder fahrspezifische Parameter des Einzelnutzers 101 während einer Radtour. Eine optionale Recheneinheit 284 der Fahrradnavigationsvorrichtung 200 kann in Abhängigkeit von den durch die Sensoren erfassten umgebungs- und/oder fahrspezifischen Parametern eine Fahrerkategorie des Einzelnutzers 101 ermitteln.

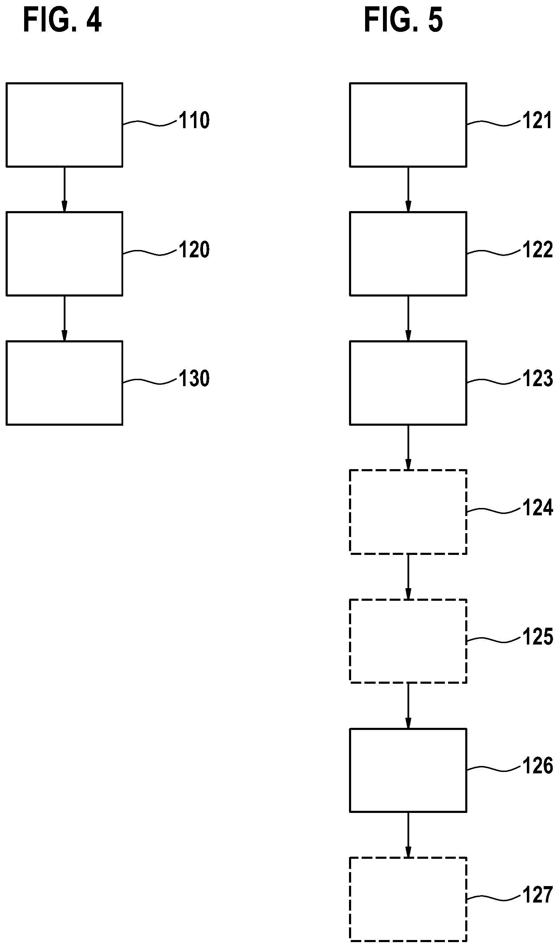

In Figur 4 ist ein Flussdiagramm des Verfahrens zur Ermittlung einer Radstrecke in Abhängigkeit einer Fahrerkategorie dargestellt. Im ersten Schritt 110 erfolgt ein Empfang einer Radstreckenanfrage von einer Fahrradnavigationsvorrichtung 200 eines Einzelnutzers 101. Im zweiten Schritt 120 wird eine Ermittlung einer Auswahlstrecke mit zugehörigen Streckenparametern aus einer Menge von möglichen Radstrecken zwischen einem Start- und einem Zielort durchgeführt. Die Ermittlung im Schritt 120 basiert auf abgespeicherten Informationen 105 zu den Radtouren einer Vielzahl an Radfahrern 102, 103 und 104 und erfolgt in Abhängigkeit der Fahrerkategorie des Einzelnutzers 101. Im letzten Schritt 130 erfolgt ein Senden der ermittelten Auswahlstrecke mit den Streckenkoordinaten und den zugehörigen Streckenparametern an die Fahrradnavigationsvorrichtung 200 des Einzelnutzers 101.

Mögliche Schritte zur Ermittlung 120 der Auswahlstrecke sind in Figur 5 als Flussdiagramm dargestellt. Zunächst wird im Schritt 121 eine Ermittlung möglicher Radstrecken zwischen dem Start- und dem Zielort in Abhängigkeit von eingelesenen Parametersätzen einer Vielzahl an Nutzern 102, 103 und 104 durchgeführt. Die zu einer möglichen Radstrecke vorliegenden orts- und zeitaufgelösten umgebungs- und/oder fahrspezifische Parametersätze, welche der Fahrerkategorie des Einzelnutzers 101 entsprechen, werden in einem Schritt 122 dieser Fahrerkategorie zugeordnet. In einem anschließenden Schritt 123 werden zu jeder möglichen Radstrecke Streckenparameter in Abhängigkeit der im Schritt 122 zugeordneten Parametersätze ermittelt. Die im Schritt 123 ermittelten Streckenparameter umfassen beispielsweise eine Durchschnittsgeschwindigkeit einer Fahrerkategorie und/oder eine durchschnittliche Steigung auf einer möglichen Radstrecke. Die Streckenparameter können auch eine maximale Geschwindigkeit, eine maximale Steigung und/oder eine Information zur Fahrbahnbeschaffenheit enthalten.

In einem optionalen Schritt 125 werden die der Fahrerkategorie des Einzelnutzers 101 zugeordneten Parametersätze gezählt.

Im Schritt 126 wird mindestens eine Auswahlstrecke zur Radstreckenanfrage aus der Menge der möglichen Radstrecken identifiziert. Die Identifizierung der Auswahlstrecke erfolgt in Abhängigkeit der ermittelten Streckenparameter und/oder der Anzahl der Parametersätze, welche der Fahrerkategorie des Einzelnutzers 101 zugeordnet sind. Die Identifizierung einer Auswahlstrecke im Schritt 126 in Abhängigkeit der Streckenparameter der möglichen Strecken erfolgt beispielsweise durch Vergleich der Streckenparameter. Beispielsweise können eine Radstreckenlänge, eine durchschnittliche Geschwindigkeit, eine durchschnittliche Steigung, eine maximale Steigung und/oder ein maximales Gefälle der möglichen Radstrecken miteinander verglichen werden. Für eine Fahrerkategorie können auch mehrere Streckenparameter als Kriterien zur Identifizierung 126 der Auswahlstrecke berücksichtigt werden. Es kann dabei eine Gewichtung der Kriterien in Abhängigkeit der Fahrerkategorie erfolgen.

Beispielsweise können für eine Fahrerkategorie Mountainbiker zur Identifizierung einer Auswahlstrecke im Schritt 126 zwischen Start- und Zielort eine Stärke der Vibrationen und ein Gefälle von möglichen Radstrecken verglichen werden. Bei einer Fahrerkategorie Durchschnittsfahrer oder Rennradfahrer kann dem Einzelnutzer 101 durch das Verfahren im Schritt 120 beispielsweise ein asphaltierter Serpentinweg statt eines steileren Waldweges als Auswahlstrecke im Schritt 126 ermittelt werden.

In einer alternativen Ausgestaltung der Erfindung erfolgt im Schritt 121 die Ermittlung möglicher Radstrecken und im Schritt 126 die Identifikation der Auswahlstrecke in Abhängigkeit von als sehenswert klassifizierten Ortskoordinaten. Solche Koordinaten sind in der Servervorrichtung 100 gespeichert und weisen Orte mit schönem Ausblick, eindrucksvoller Kulisse und/oder sehenswerten Gebäuden aus. Beispielsweise wird für diese Fahrerkategorie im Schritt 126 eine Auswahlstrecke mit einer hohen Anzahl an als sehenswert klassifizierten Ortskoordinaten ermittelt.

In einer weiteren Ausführung der Erfindung werden zur Ermittlung 123 der Streckenparameter möglicher Strecken die Parametersätze aus den Informationen 105 zeitlich gewichtet, wobei aktuelle Parametersätze eine höhere Gewichtung erhalten. Durch eine zeitliche Gewichtung der Parametersätze bei der Ermittlung 123 der Streckenparameter werden aktuelle Änderungen des Fahrbahnbelages, potentielle Baustellen, umgefallene Bäume oder aktuelle Unfälle auf einer möglichen Radstrecke bei der Identifizierung einer Auswahlstrecke im Schritt 126 stärker berücksichtigt als zeitlich weiter zurückliegende Parametersätze.

In einer weiteren, alternativen Ausführung der Erfindung wird in einem optionalen Schritt 124 zur Ermittlung 120 der Auswahlstrecke ein Batterieladezustand eines Elektrofahrrads des Einzelnutzers 101 durch einen zusätzlichen Sensor und/oder durch eine Auswertung der Recheneinheit 284 erfasst. Die Identifizierung 126 der Auswahlstrecke kann in dieser Ausführung in Abhängigkeit des erfassten Batterieladezustands erfolgen.

Wie in Figur 5 dargestellt, umfasst in einer bevorzugten Weiterführung der Erfindung die Ermittlung 120 der Auswahlstrecke einen weiteren Schritt 127, wodurch Steuerungsdaten für die Ansteuerung eines Elektromotors auf der Auswahlstrecke ermittelt werden. Die Steuerungsdaten werden in Abhängigkeit von dem im Schritt 124 ermittelten Batterieladezustand, von der Fahrerkategorie des Einzelnutzers 101 und von den umgebungsspezifischen Parametern ermittelt. Beispielsweise kann durch die Steuerungsdaten auf einem Streckenabschnitt mit großen Steigungen die Kraftunterstützung durch den Elektromotor für einen Einzelnutzer 101 erhöht werden. Die ermittelten Steuerungsdaten werden im Schritt 130 zusammen mit der Auswahlstrecke mit den Streckenkoordinaten und den zugehörigen Streckenparameter an die Fahrradnavigationsvorrichtung 200 des Einzelnutzers 101 gesendet.

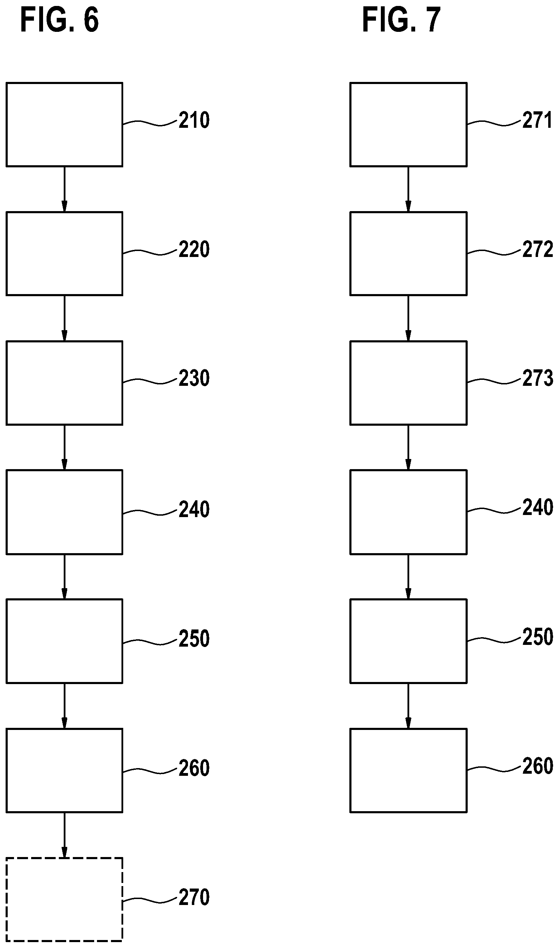

In Figur 6 ist das Verfahren zur Radstreckenanfrage auf einer Fahrradnavigationsvorrichtung 200 als Flussdiagramm dargestellt. Es umfasst ein Erfassen 210 eines Startortes. Der Startort kann mittels von einem GPS-Sensor empfangenen Ortskoordinaten oder durch manuelle Eingabe erfasst werden. Ein Satellitennavigationssensor (im weiteren Text als GPS-Sensor bezeichnet) kann in der Fahrradnavigationsvorrichtung 200 oder am Fahrrad angebracht sein, z.B. in einem Smartphone. Das Verfahren umfasst im Schritt 220 außerdem ein Erfassen eines Zielortes durch manuelle Eingabe.

Im Schritt 230 wird eine Fahrerkategorie erfasst. Die Fahrerkategorie repräsentiert eine Leistungsfähigkeit und/oder ein gewünschtes Fahrverhalten des Einzelnutzers 101. Es sind mindestens zwei vorgegebene Fahrerkategorien vorgesehen, z.B. die Fahrerkategorien untrainiert und trainiert. In einer alternativen Ausführung können entsprechend eines gewünschten Fahrverhaltens die Fahrerkategorien Mountainbiker und Rennradfahrer vorgesehen sein. In einer weiteren, alternativen Ausgestaltung der Erfindung können die Fahrerkategorien eine Leistungsfähigkeit des Fahrers in Kombination mit einem gewünschten Fahrverhalten charakterisieren, wobei z.B. die Fahrerkategorien normaler Rennradfahrer und schneller Rennradfahrer vorgesehen sind.

Das Verfahren umfasst nach Figur 6 außerdem ein Absenden 240 einer Radstreckenanfrage an eine Servervorrichtung 100. Die Radstreckenanfrage umfasst den Start- und den Zielort sowie die erfasste Fahrerkategorie. Das Verfahren zur Radstreckenanfrage umfasst des Weiteren ein Empfangen 250 und im Schritt 260 ein Anzeigen einer Auswahlstrecke mit den zugehörigen Streckenkoordinaten und den Streckenparametern. Das Anzeigen 260 erfolgt auf dem Anzeigegerät 283 der Fahrradnavigationsvorrichtung 200.

Alternativ werden im Schritt 120 mehrere Auswahlstrecken von der Servervorrichtung 100 ermittelt und im Schritt 130 von der Servervorrichtung 100 an die Fahrradnavigationsvorrichtung 200 gesendet. Die Fahrradnavigationsvorrichtung 200 empfängt die Auswahlstrecken mit den zugehörigen Streckenkoordinaten und den Streckenparametern im Schritt 250. Im Schritt 260 können dem Einzelnutzer 101 demnach mehrere Auswahlstrecken zur Auswahl vorgeschlagen werden. Die Auswahlstrecken unterscheiden sich beispielsweise in einer Radstreckenlänge und/oder einer maximalen Steigung.

Wie in Figur 6 dargestellt, umfasst das Verfahren in einer alternativen Ausführung im Schritt 270 ein automatisiertes Ermitteln der Fahrerkategorie mit Neuermittlung der Auswahlstrecke. Der Schritt 270 kann in mehrere Schritte 271 bis 276 unterteilt sein, wie im Flussdiagramm in Figur 7 dargestellt. Zunächst erfolgt im Schritt 271 ein Erfassen von umgebungs- und/oder fahrspezifischen Parametern des Einzelnutzers 101 auf mindestens einem Teil der Auswahlstrecke. Die Erfassung der Parameter des Einzelnutzers 101 im Schritt 271 erfolgt mit mindestens einem Sensor am Fahrrad und/oder in der Fahrradnavigationsvorrichtung 200. Es können auch eine Vielzahl von Sensoren verwendet werden, z.B. ein GPS-Sensor 285, ein Beschleunigungssensor 286, ein Gyroskop 287 und ein Trittfrequenzsensor 288, wie in Figur 3 dargestellt.

Im Schritt 272 wird die Fahrerkategorie des Einzelnutzers 101 in Abhängigkeit von den vorgegebenen Fahrerkategorien und den erfassten umgebungs- und/oder fahrspezifischen Parametern des Einzelnutzers 101 ermittelt. In einem weiteren Schritt 273 wird die ermittelte Fahrerkategorie mit der von dem Einzelnutzer 101 im Schritt 230 manuell eingegebenen Fahrerkategorie verglichen. Alternativ wird die ermittelte Fahrerkategorie mit einer zu einem früheren Zeitpunkt ermittelten Fahrerkategorie verglichen. Bei einer Abweichung zwischen der im Schritt 272 ermittelten Fahrerkategorie und der im Schritt 230 manuell eingegebenen bzw. früher ermittelten Fahrerkategorie, erfolgt im Schritt 240 ein Absenden einer neuen Radstreckenanfrage an eine Servervorrichtung 100. Die neue Radstreckenanfrage umfasst einen aktuellen Startort, den Zielort und die ermittelte Fahrerkategorie. Im Schritt 250 wird eine neue Auswahlstrecke mit zugehörigen Streckenkoordinaten und den Streckenparametern empfangen und diese im Schritt 260 dem Einzelnutzer 101 angezeigt.

In einer alternativen Ausgestaltung des Verfahrens zur Radstreckenanfrage werden die im Schritt 271 durch Sensoren erfassten fahrspezifischen Parametersätze des Einzelnutzers 101 mit von der Servervorrichtung 100 empfangenen durchschnittlichen, fahrspezifischen Parametern anderer Fahrerkategorien auf der gleichen Radstrecke verglichen. Dadurch wird es einem Einzelnutzer 101 ermöglicht, seine Leistungsfähigkeit mit derjenigen einer Vielzahl anderer Radfahrer 102, 103 und 104 zu vergleichen.

In einer alternativen Ausführung erfolgt im Schritt 126 die Identifizierung der Auswahlstrecke aus der Menge der möglichen Radstrecken in Abhängigkeit von orts- und zeitaufgelösten Wetterdaten 197 einer Wetterdatenbank 194. Auf einer längeren Radstrecke kann so eine sonnigere oder eine weniger regnerische Radstrecke als Auswahlstrecke ermittelt werden.

In einer weiteren, alternativen Ausführung erfolgt im Schritt 120 die Ermittlung der Auswahlstrecke in Abhängigkeit von ortsaufgelösten Verkehrsdaten 198 der möglichen Radstrecken, wie beispielsweise in Abhängigkeit des PKW- und LKW-Verkehrs. Durch die Berücksichtigung von Verkehrsdaten 198 einer Verkehrsdatenbank 195 im Schritt 126 kann beispielsweise durch die ermittelte Auswahlstrecke ein Stau umfahren werden.

In einer weiteren, alternativen Ausführung erfolgt die Ermittlung 120 der Auswahlstrecke in Abhängigkeit von ortsaufgelösten Beleuchtungsdaten 199 der möglichen Radstrecken, wobei die Beleuchtungsdaten 199 in einer Beleuchtungsdatenbank 196 gespeichert sind. Dem Einzelnutzer 101 wird somit eine beleuchtete und deshalb sicherere Auswahlstrecke ermittelt und angezeigt.

Die Beleuchtungsdaten 199 können durch die Empfangseinheit 180 der Servervorrichtung 100 mit den umgebungsspezifischen Parametern 105 der Radtouren von einer Vielzahl an Radfahrern 102, 103 und 104 empfangen und auf der Servervorrichtung 100 gespeichert werden. Die Beleuchtungsdaten 199 können beispielsweise Informationen über Radstrecken mit Straßenlaternen enthalten.

## Patentansprüche

1. Verfahren zur Radstreckenanfrage umfassend die Schritte
• Erfassen (210) eines Startortes,
• Erfassen (220) eines Zielortes,
• Erfassen (230) einer Fahrerkategorie, wobei die Fahrerkategorie eine Leistungsfähigkeit und/oder ein gewünschtes Fahrverhalten eines Einzelnutzers (101) entsprechend vorgegebenen Fahrerkategorien repräsentiert,
• Absenden (240) einer Radstreckenanfrage an eine Servervorrichtung (100), welche ein Verfahren zur Ermittlung von Radstrecken in Abhängigkeit einer Fahrerkategorie durchführt, umfassend
i. den Startort,
ii. den Zielort, und
iii. die Fahrerkategorie,
• Empfangen (250) einer Auswahlstrecke mit Streckenkoordinaten und den zugehörigen Streckenparametern, und
• Anzeigen (260) der Auswahlstrecke mit den Streckenkoordinaten und den zugehörigen Streckenparametern,
• Erfassen (271) der umgebungs- und/oder fahrspezifischen Parameter des Einzelnutzers (101) auf mindestens einem Teil der Auswahlstrecke mittels Sensoren (285, 286, 287, 288),
• Ermitteln (272) der Fahrerkategorie des Einzelnutzers (101) in Abhängigkeit von den vorgegebenen Fahrerkategorien und von den erfassten umgebungs- und/oder fahrspezifischen Parametern des Einzelnutzers (101),
• Vergleich (273) der ermittelten Fahrerkategorie (272) mit der erfassten Fahrerkategorie (230), wobei bei einer Abweichung zwischen der ermittelten Fahrerkategorie (272) und der erfassten Fahrerkategorie (230) das Absenden (240) einer neuen Radstreckenanfrage an eine Servervorrichtung (100) erfolgt, wobei die neuen Radstreckenanfrage
i. einen neuen, aktuellen Startort,
ii. den Zielort, und
iii. die ermittelte Fahrerkategorie (272),
umfasst,
• Empfangen (250) von einer neuen Auswahlstrecke mit den zugehörigen Streckenparametern, und
• Anzeigen (260) der neuen Auswahlstrecke mit den zugehörigen Streckenparametern.

2. Verfahren nach Anspruch 1, **dadurch gekennzeichnet, dass** die Erfassung (230) der Fahrerkategorie aus mindestens zwei vorgegebenen Fahrerkategorien durch manuelle Eingabe des Einzelnutzers (101) erfolgt.

3. Fahrradnavigationsvorrichtung (200) zur Durchführung eines Verfahrens entsprechend einem der Ansprüche 1 oder 2, wobei die Fahrradnavigationsvorrichtung (200) mindestens folgende Komponenten aufweist
• ein Eingabegerät (280) zur Erfassung eines Startortes (210), eines Zielortes (220) und/oder einer Fahrerkategorie (230), welche eine Leistungsfähigkeit und/oder ein gewünschtes Fahrverhalten des Einzelnutzers (101) repräsentiert, und
• eine Sendeeinrichtung (281) zum Senden (240) einer Radstreckenanfrage an eine Servervorrichtung (100), und
• eine Empfangseinheit (282) zum Empfang (250) einer Auswahlstrecke mit zugehörigen Streckenparametern, und
• ein Anzeigegerät (283) zum Anzeigen (260) der Auswahlstrecke mit den zugehörigen Streckenparametern,
• Sensoren (285, 286, 287, 288) zur Erfassung der umgebungs- und/oder fahrspezifischen Parameter des Einzelnutzers (101), und
• eine Recheneinheit (284), welche
i. die Fahrerkategorie des Einzelnutzers (101) in Abhängigkeit von vorgegebenen Fahrerkategorien und den erfassten umgebungs- und/oder fahrspezifischen Parametern des Einzelnutzers (101) ermittelt,
ii. die ermittelte Fahrerkategorie mit der erfassten Fahrerkategorie vergleicht, wobei
• die Sendeeinrichtung (281) bei Abweichung der ermittelten Fahrerkategorie von der erfassten Fahrerkategorie eine neue Radstreckenanfrage an eine Servervorrichtung (100) umfassend einen neuen, aktuellen Startort, den Zielort und die ermittelte Fahrerkategorie versendet,
• die Empfangseinheit (282) eine neuen Auswahlstrecke mit zugehörigen Streckenparametern empfängt, und
• das Anzeigegerät (283) die neue Auswahlstrecke mit den zugehörigen Streckenparametern anzeigt.
